# EUROPÄISCHE PATENTSCHRIFT

(11) **EP 2 419 893 B1**
(45) Veröffentlichungstag und Bekanntmachung des Hinweises auf die Patenterteilung: **01.05.2013**
(21) Anmeldenummer: 10718463.2
(22) Anmeldetag: 12.04.2010
(51) Int. Cl.: G09F 9/30, G06F 1/16

(54) **VORRICHTUNG ZUR ABSCHATTUNG VON FREMDLICHT UND ZUR ERZEUGUNG DEFINIERTER LICHTVERHÄLTNISSE AN EINEM MONITOR**
DEVICE FOR SHADOWING OF EXTERNAL LIGHT AND FOR GENERATING DEFINED LIGHT CONDITIONS ON A MONITOR
DISPOSITIF DE MASQUAGE LA LUMIÈRE EXTERNE ET POUR GÉNÉRER DES CONDITIONS LUMINEUSES DÉFINIES SUR UN ÉCRAN DE MONITEUR

(30) Priorität: 17.04.2009 DE 102009017551
(43) Veröffentlichungstag der Anmeldung: 22.02.2012
(73) Patentinhaber: Caddon Color Technology Gmbh, 52072 Aachen (DE)
(72) Erfinder: GLOWINSKI, Arndt, 52074 Aachen (DE); POST, Ronald, 52062 Aachen (DE); HELLING, Stephan, 52066 Aachen (DE)
(74) Vertreter: Binder, Armin
(86) Internationale Anmeldenummer: PCT/EP2010/002244
(87) Internationale Veröffentlichungsnummer: WO 2010/118846

(56) Entgegenhaltungen:
- EP-A2- 1 889 721
- FR-A- 1 255 173
- US-A- 5 069 529
- US-A- 5 589 985

## Beschreibung

Die Erfindung betrifft eine Vorrichtung zur Abschattung von Fremdlicht und zur Erzeugung definierter Lichtverhältnisse an einem Monitor und gegebenenfalls an einem Muster, mit Beschattungselementen, bestehend aus zwei Seitenwänden, einer Blende und einem Oberteil, weiterhin mit einer Grundplatte und einer Vorrichtung zur Verhinderung rückwärtig eindringendem Fremdlicht, und mindestens einer Lichtquelle zur Beleuchtung einer Monitoroberfläche.

Lichtkästen, die dazu verwendet werden an einem Monitor definierte Lichtverhältnisse zu schaffen und die Monitoroberfläche gegen Fremdlicht abzuschatten, sind allgemein bekannt. Ihre Bestandteile sind im Wesentlichen eine Rückwand, zwei Seitenwände, ein Oberteil, eine Grundplatte und eine Blende. Das Oberteil, sowie die Seitenwände und die Blende beschatten dabei den Monitor gegen diffuses und/oder nicht definiertes Licht aus der Umgebung. Sie werden im folgenden Text unter dem Oberbegriff Beschattungselemente zusammengefasst. Die Grundplatte verbindet und stabilisiert die anderen Bauteile und sorgt für einen festen Stand des Lichtkastens an einem bestimmten Platz, zum Beispiel auf einer Schreibtischplatte. Weiterhin sind im Lichtkasten noch eine oder mehrere unterschiedliche Lichtquellen integriert, die die Monitoroberfläche mit einem definierten und bekannten Lichtspektrum bestrahlen.

Diese Beschattungskonstruktionen werden vor allem bei Farbvergleichen zwischen Farbbeispielen auf der Monitoroberfläche und Farbmustern, beispielsweise aus Stoff, benötigt. Dabei sollte der Monitor einerseits von allen Seiten möglichst gut gegen Fremdlicht abgeschattet werden können, andererseits sollte aber das Sichtfeld auf die Monitoroberfläche weiterhin möglichst frei bleiben.

Bei den bisher bekannten Ausführungen ist die Positionierung der Lichtkästen am Monitor unflexibel und starr. Der Blick auf den Monitor wird stets durch die weit nach vorn gezogenen Beschattungselemente tunnelartig eingeschränkt und eignet sich daher nur als Farbmusterungsplatz. Da jedoch die Hardware eines solchen Arbeitsplatzes auch problemlos für normale Büroarbeiten einsetzbar ist, ist es wünschenswert, einen solchen Arbeitsplatz dahingehend flexibel zu gestalten, dass die Beschattung flexibel und schnell entfernt werden kann. Im folgenden Text wird die Nutzung eines solchen Arbeitsplatzes für herkömmliche Büroarbeiten mit Normalbetrieb bezeichnet.

Außerdem ist die für den Farbvergleich benötigte Lichtquelle möglicherweise sehr hell. Dies kann ebenfalls als störend empfunden werden. Wird sie allerdings während des Normalbetriebs ausgeschaltet, benötigt sie nach einem erneuten Anschalten längere Aufwärmzeiten. Dadurch wird die Flexibilität in der Nutzung eines derartigen Arbeitsplatzes stark einschränkt. Ein mit einem Lichtkasten ausgestatteter Arbeitsplatz bietet also wenig Komfort - tunnelartiges Sichtfeld, helles Licht - und ist nicht flexibel einsetzbar - lange Aufwärmzeiten der Lichtquelle.

Die FR 1 255 173 A beschreibt eine Vorrichtung zur Abschattung von Fremdlicht an einem Monitor mit verstellbaren und/oder zusammenfaltbaren Beschattungselementen, welche zumindest seitlich und oberhalb des Monitor angeordnet und mit diesem verbunden sind. Insbesondere wird hier eine Abschattung bezüglich seitlich des Monitors positionierten Lichtquellen gewährleistet.

Es ist daher Aufgabe der Erfindung, den bereits bekannten Lichtkasten weiter zu verbessern, so dass er zum einen uneingeschränkte Sicht auf die Monitoroberfläche und zum anderen eine flexible und komfortable Nutzbarkeit eines mit einem Lichtkasten ausgestatteten Arbeitsplatzes ermöglicht. Hierbei sollten keine Einschränkungen in der Funktionalität entstehen.

Diese Aufgabe wird durch die Merkmale des unabhängigen Patentanspruches gelöst. Vorteilhafte Weiterbildungen der Erfindung sind Gegenstand untergeordneter Ansprüche.

Die Erfinder haben erkannt, dass ein flexibler Einsatz des Lichtkastens dadurch möglich ist, dass die Beschattungselemente zumindest teilweise verfahrbar ausgestaltet werden. Insbesondere kann dies erreicht werden, indem der Lichtkasten mit einem Rollo- und/oder Schienensystem ausgestattet wird. Beispielsweise können die Beschattungselemente des Lichtkastens zumindest teilweise nach hinten weggefahren werden, wenn der Monitor für sonstige Arbeiten verwendet wird. Somit besteht freie und uneingeschränkte Sicht auf die Monitoroberfläche, da das Sichtfeld durch die Seitenwände, das Oberteil und die Blende nicht mehr tunnelartig eingeschränkt wird. Bei Bedarf können die zurückgefahrenen Elemente des Lichtkastens wieder in ihre Ausgangsposition zurück gebracht werden, so dass die Beschattung des Monitors wieder gewährleistet ist. Es kann also beliebig und schnell zwischen einer Arbeitssituation mit und ohne Beschattung des Monitors gewechselt werden. Weiterhin kann durch das Zurückschieben zumindest der Beschattungselemente erreicht werden, dass der Benutzer nicht mehr von der eventuell sehr hellen zwischen Blende und Monitor angeordneten Lichtquelle gestört wird.

Grundsätzlich gibt es verschiedene Varianten des Rollo- und/oder Schienensystems. Eine einfachste Variante besteht darin, die Beschattungselemente und falls vorhanden die Rückwand des Lichtkastens, also den gesamten oberen Teil, über den Monitor hinweg nach hinten zu schieben. Dazu können die Seitenwände in einer Führungsschiene an der Grundplatte fixiert und in ihrer Bewegung stabilisiert werden. Bei dieser Variante wird allerdings relativ viel Platz im Bereich hinter dem Monitor benötigt. In der Regel ist hierfür aber der Tisch nicht ausreichend tief.

Alternativ können die Beschattungselemente auch mehrteilig und teleskopartig ineinander verfahrbar ausgestaltet werden. Dann kann auch nur ein vorderer Teil der Beschattungselemente, also die Blende mit den vorderen Bereichen der in diesem Fall zweiteilig gestalteten Seitenwände und des Oberteils, teleskopartig nach hinten geschoben werden. Um die Blende im zusammengefahrenen Zustand möglichst nah an den Monitor zu bringen, können zusätzlich die zusammengeschobenen Beschattungselemente zusammen noch weiter nach hinten geschoben werden. Der Platzbedarf des zusammengeschobenen Lichtkastens entspricht dabei nahezu dem des ausgefahrenen Lichtkastens. Diese Alternativen erlauben jeweils im Normalbetrieb uneingeschränkte Sicht auf den Monitor. Die Lichtquelle wird bei beiden Varianten hinter den Monitor geschoben, da sie im vorderen Bereich der Beschattungselemente integriert ist. Somit stört sie den Benutzer im Normalbetrieb nicht mehr und kann eingeschaltet bleiben, um eventuelle Aufwärmzeiten zu vermeiden und folglich eine flexible Nutzung und schnellen Wechsel zu ermöglichen.

In einer anderen Variante ist es möglich, die Seitenwände teilweise oder komplett als Rollo aus einem lichtundurchlässigen Material zu gestalten, so dass diese in den Bereich hinter den Monitor aufgerollt werden können. Dabei bildet das Oberteil, die Blende, die Rückwand und die Grundplatte ein feststehendes Gehäuse. Die Sicht auf den Monitor ist also nicht komplett frei, da die Blende und das Oberteil unverändert stehen bleiben. Bei Bedarf können die Rollos ganz oder möglicherweise auch nur teilweise nach vorne entrollt werden. Entsprechend ist auch eine Ausführung der Rollos in vertikaler Richtung möglich, so dass diese nach oben oder unten aufgerollt werden können. Ein Schienensystem am restlichen Gehäuse kann jeweils die Rollos stabilisieren und für einen lichtundurchlässigen Abschluss sorgen, so dass eine optimale Beschattung des Monitors gewährleistet bleibt.

Entsprechend diesen Grundgedanken schlagen die Erfinder vor, eine Vorrichtung zur Abschattung von Fremdlicht und zur Erzeugung definierter Lichtverhältnisse an einem Monitor und gegebenenfalls an einem Muster, mit Beschattungselementen, bestehend aus zwei Seitenwänden, einer Blende und einem Oberteil, weiterhin mit einer Grundplatte und einer Vorrichtung zur Verhinderung von rückwärtig eindringendem Fremdlicht, und mindestens einer Lichtquelle zur Beleuchtung einer Monitoroberfläche, dahingehend zu verbessern, dass die Beschattungselemente zumindest teilweise verfahrbar ausgestaltet sind und die mindestens eine Lichtquelle im vorderen Bereich der Beschattungselemente derart integriert ist, dass diese nach dem Zurückschieben der Beschattungselemente den Monitor nicht beleuchtet.

Die Vorrichtung zur Verhinderung von rückwärtig eindringendem Fremdlicht kann einerseits in einer Rückwand bestehen, andererseits durch eine lichtdichte Abdichtung zwischen einem Monitor oder einem Monitorrahmen und umgebend angeordneten Beschattungselementen unter Verzicht auf eine Rückwand verwirklicht werden. Bei dieser letzteren Ausführungsvariante ist automatisch für ausreichende Lüftung gesorgt. Ergänzend sei allerdings auch bemerkt, dass auch eine Kombination beider Merkmale im Rahmen der Erfindung liegt.

In einer vorteilhaften Ausführung des erfindungsgemäßen Lichtkastens sind die Beschattungselemente, also die Seitenwände, die Blende und das Oberteil, sowie die Rückwand komplett verschiebbar ausgeführt. Besteht kein Bedarf für eine Beschattung des Monitors, können diese Teile über den Monitor hinweg nach hinten geschoben werden. Die Sicht auf den Monitor wird dann nicht mehr beeinträchtigt und ist uneingeschränkt frei, da alle beschattenden Teile sich hinter dem Monitor befinden. Somit kann der Arbeitsplatz komfortabel auch für herkömmliche Büroarbeiten genutzt werden. Nachteilig an dieser Ausführung ist allerdings der erhöhte Platzbedarf im Bereich hinter dem Monitor, da das gesamte Oberteil mit den Seitenwänden und der Rückwand dort Platz braucht.

Eine alternative Ausführung des erfindungsgemäßen Lichtkastens sieht vor, dass die Beschattungselemente, bis auf die Blende, jeweils zweiteilig ausgeführt sind. Dann können die Vorderteile, also die zum Benutzer gerichteten Bereiche, zusammen mit der Blende zu den Rückteilen nach hinten geschoben werden. Im Gegensatz zur ersten beschriebenen Ausführung besteht hier kein enormer Platzbedarf hinter dem Monitor, da die Rückteile mit der Grundplatte unverändert stehen bleiben und der Platzbedarf sich somit nicht ändert. Bei beiden Möglichkeiten wird die hinter der Blende angeordnete Lichtquelle vorteilhafterweise mit nach hinten geschoben, so dass der Monitor nicht mehr angestrahlt wird. Es ist dann nicht mehr nötig, die Lichtquelle an- und auszuschalten, wodurch längere Aufwärmzeiten vermieden werden. Hiermit ist eine wesentlich flexiblere Nutzung eines mit einem derartigen Lichtkasten ausgestatteten Monitors möglich.

Eine weitere vorteilhafte Ausführung des erfindungsgemäßen Lichtkastens besteht darin, dass die Seitenwände und die Rückwand in dem horizontalen Querschnitt C-förmig ausgebildet sind. Die Seitenwände können dann für den Normalbetrieb teleskopartig zum hinteren Teil des C-Bogens geschoben werden, so dass das Sichtfeld an der Seite frei ist. Hier bleibt das Oberteil mit der Blende und der Lichtquelle über dem Monitor stehen, so dass das Sichtfeld von oben immer noch beeinträchtigt ist.

Vorteilhafterweise kann die Grundplatte bei den drei bisher beschriebenen Ausführungsbeispielen ein Schienensystem aufweisen, so dass die Seitenwände in diesen Schienen zur Führung angeordnet werden können. Durch die Führung ist eine schnelle und flexible Änderung der Arbeitssituation möglich.

In einer anderen vorteilhaften Ausführung des erfindungsgemäßen Lichtkastens können die Seitenwände zumindest teilweise als Rollo oder gleichwertig als Jalousie ausgeführt werden, wobei die Rollos entweder horizontal oder vertikal ausgeführt sein können und vorteilhafterweise aus einem lichtundurchlässigen Material bestehen. Diese Rollos können bei Bedarf über beziehungsweise hinter den Monitor aufgerollt werden, so dass zumindest die Seitenwände die Sicht auf den Monitor nicht mehr einschränken. Nachteilhaft an dieser Lösung ist, dass die Position des Oberteils mit der dort angebrachten Lichtquelle nicht verändert wird. Das Oberteil und die Blende schränken das Sichtfeld weiterhin ein und die Lichtquelle kann demnach im Normalbetrieb stören. Alternativ können die Lampen mit einer Abschattungsblende unterhalb der Lampen versehen werden.

Entsprechend einer weiteren Ausführungsmöglichkeit des erfindungsgemäßen Lichtkastens können die Beschattungselemente klappbar ausgeführt werden. Besteht kein Bedarf für eine Beschattung des Monitors, können die Seitenwände, sowie das Oberteil und die Blende nach hinten zur Rückwand geklappt werden, so dass diese parallel zur Rückwand liegen. Das Sichtfeld ist dann vollkommen frei. Die Lichtquelle wird mit dem Oberteil zusammen zurückgeklappt und stört den Benutzer nicht mehr.

Bei allen angeführten Ausführungen sollten die Verbindungen zwischen den einzelnen Bauteilen, vor allem zwischen dem Oberteil, der Blende und den Seitenwänden oder den Rollos, lichtundurchlässig sein, so dass eine vollständige Beschattung ohne störenden Lichteinfall möglich ist. Die Innenseiten der Blenden beziehungsweise der Grundplatte sind optimalerweise mit einer Licht schluckenden Oberfläche versehen, z.B. schwarzem Samt oder einer schwarzen Lackierung, um Reflexionen des Lichtes an den Innenseiten des Lichtkastens zu vermeiden.

Des Weiteren ist es vorteilhaft, wenn mindestens eine Lüftungsvorrichtung, beispielsweise ein Ventilator in Kombination mit mehreren Luftschlitzen in der Rückwand, in den erfindungsgemäßen Lichtkasten integriert ist. Dies ermöglicht eine Ventilation der Luft innerhalb des Lichtkastens und vor allem hinter dem Monitor, der sich im Betrieb erwärmt. Zusätzliche durch die Lichtquelle entstehende Wärme wird dabei aus dem Lichtkasten auch abgeführt. Vorteilhafterweise kann ein Schalter zum Ein- und Ausschalten der mindestens einen Lüftungsvorrichtung am Lichtkasten angebracht sein. Außerdem kann im Bereich der Lüftungsvorrichtung eine Lichtfalle angebracht werden, die ein Eindringen von Fremdlicht durch die Lüftungsvorrichtung verhindert.

Vorteilhafterweise kann der erfindungsgemäße Lichtkasten auch über einen oder mehrere Schalter für die mindestens eine Lichtquelle verfügen, so dass gezielt die eine oder andere Lichtquelle bedient werden kann.

Weiterhin kann es sinnvoll sein, wenn der erfindungsgemäße Lichtkasten über eine Entriegelungsvorrichtung verfügt. Damit kann ein unbeabsichtigtes Zurückschieben, Aufrollen oder Zurückklappen einzelner oder mehrerer Beschattungselemente verhindert werden, um Störungen zu vermeiden. Gleichzeitig können die Bauteile auch für den Normalbetrieb fixiert werden.

In einer besonders komfortablen Variante des erfindungsgemäßen Lichtkastens können die verfahrbaren Bauteile über einen automatischen Antrieb, zum Beispiel einen Elektroantrieb, verfügen. Durch Betätigen eines Schalters kann die jeweils gewünschte Arbeitssituation hergestellt werden.

Im Folgenden wird die Erfindung anhand der bevorzugten Ausführungsbeispiele mit Hilfe der Figuren näher beschrieben, wobei darauf hingewiesen wird, dass nur die für das unmittelbare Verständnis der Erfindung wesentlichen Elemente gezeigt sind.

Es zeigen im Einzelnen:
- FIG 1:: Schrägansicht eines ersten Ausführungsbeispiels eines Lichtkastens im ausgefahrenen Zustand;
- FIG 2:: Vertikaler Querschnitt durch Figur 1;
- FIG 3:: Seitenansicht eines ersten Ausführungsbeispiels eines Lichtkastens im zusammengeschobenen Zustand;
- FIG 4:: Vertikaler Querschnitt durch Figur 3;
- FIG 5:: Draufsicht eines ersten Ausführungsbeispiels eines Lichtkastens im ausgefahrenen Zustand gemäß Figur 1;
- FIG 6:: Draufsicht eines ersten Ausführungsbeispiels eines Lichtkastens im zusammengeschobenen Zustand gemäß Figur 3;
- FIG 7:: Rückansicht eines Lichtkastens gemäß den Figuren 1 bis 6;
- FIG 8:: Lichtkasten mit horizontalem Rollo im geschlossenen Zustand;
- FIG 9:: Lichtkasten mit horizontalem Rollo im offenen Zustand;
- FIG 10:: C-förmiger Lichtkasten im geschlossenen Zustand;
- FIG 11:: C-förmiger Lichtkasten im offenen Zustand.

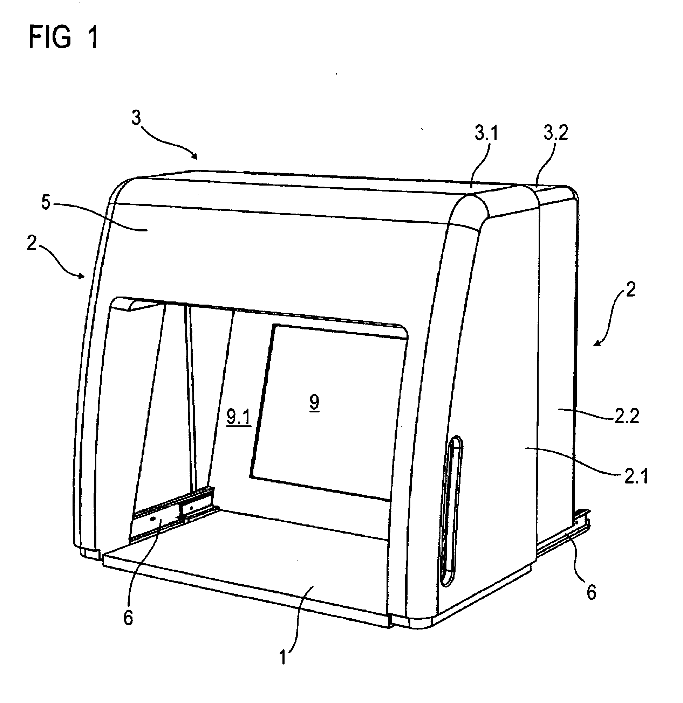

Die **Figur 1** zeigt ein erstes Ausführungsbeispiel des erfindungsgemäßen Lichtkastens von schräg vorne. Der gesamte Lichtkasten besteht im Wesentlichen aus den Beschattungselementen, bestehend aus den Seitenwänden 2, dem Oberteil 3 und der Blende 5, der hier nicht sichtbaren Rückwand und der Grundplatte 1. Die Beschattungselemente, mit Ausnahme der Blende 5, sind zweiteilig jeweils mit einem Vorderteil 2.1 und 3.1 und einem Rückteil 2.2 und 3.2 ausgeführt. Der Lichtkasten ist hier im ausgefahrenen Zustand zu sehen. Der Monitor 9 im Inneren des Lichtkastens, der von einem standardisierten Monitorrahmen 9.1 außerhalb der Bildfläche abgedeckt ist und beispielsweise in neutralem Grau, mit möglichst wenig reflektierender Oberfläche, gehalten sein kann, wird also von den Beschattungselementen gegen Fremdlicht abgeschattet. Zusätzlich befindet sich im Inneren eine hier nicht erkennbare Lichtquelle, die Licht mit einer definierten bekannten spektralen Zusammensetzung erzeugt und auf den Monitor abstrahlt.

Durch die Beschattung des Monitors 9 ist das Sichtfeld eines Benutzers stark tunnelartig eingeschränkt. Die Blende 5 ist möglichst tief herunter gezogen und die Seitenwände 2 reichen bis weit nach vorne, um eine gute Abschattung zu gewährleisten. Für die normale Nutzung eines mit einem Lichtkasten ausgestatteten Monitors 9 ist dies sehr unkomfortabel. Zusätzlich stört das meist sehr helle Licht der Lichtquelle.

Die Beschattungselemente sind miteinander formschlüssig und vor allem mit möglichst lichtundurchlässigen Verbindungen verbunden und auf der Grundplatte 1 angeordnet, auf der auch der Monitor 9 positioniert ist. Diese Grundplatte 1 bildet die Grundfläche des Lichtkastens und dient zur stabilen Positionierung. Zusätzlich befindet sich an ihren Seiten ein Schienensystem mit Schienen 6, in denen die Seitenwände 2 verschiebbar angeordnet sind.

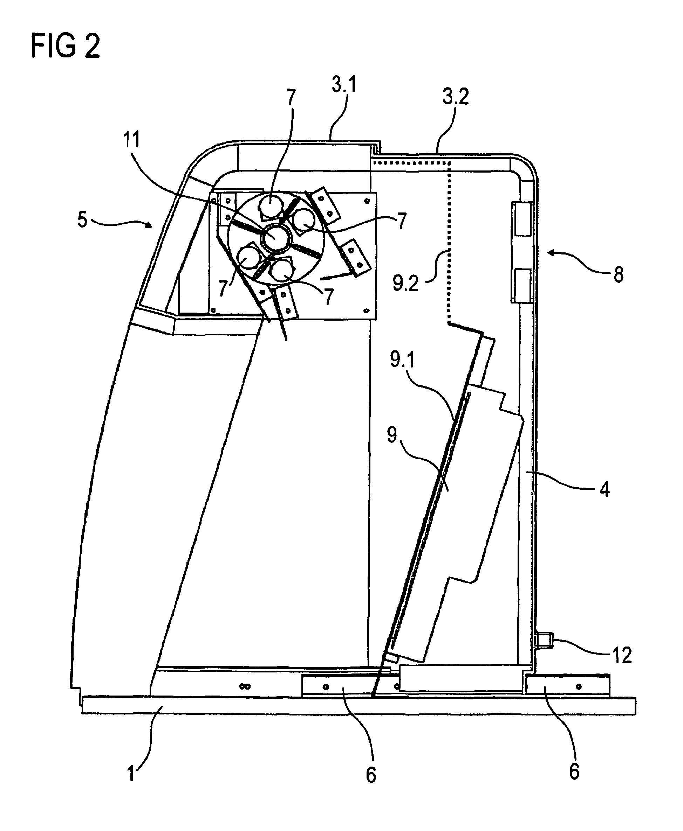

Die **Figur 2** zeigt einen vertikalen Querschnitt durch den erfindungsgemäßen Lichtkasten aus der Figur 1. Besonders gut zu erkennen sind die seitlich angeordneten Schienen 6 an der Grundplatte 1, in denen die Seitenwände angeordnet sind. Innerhalb des Lichtkastens befinden sich direkt hinter der Blende 5 unter dem Oberteil, bestehend aus Vorder- und Rückteil 3.1 und 3.2, mehrere Leuchtstoffröhren 7. Es können hier gezielt zwei Leuchtstoffröhren 7 ausgewählt werden und mit Hilfe einer Drehvorrichtung 11 in Position gebracht werden, um den Monitor 9, einschließlich des ihn randseitig umgebenden Monitorrahmens 9.1, gleichzeitig mit Licht eines bestimmten Wellenlängenbereiches zu bestrahlen. Grundsätzlich ist die Erfindung natürlich nicht auf insgesamt vier Leuchtstoffröhren beschränkt, von denen zwei zur Beleuchtung ausgewählt werden können. Die Erfindung umfasst auch eine beliebige Anzahl von Lichtquellen, die einzeln oder gruppenweise angewählt werden können.

In der Rückwand 4 befindet sich eine Aussparung für einen Ventilator 8, der die sich beim Betrieb des Monitors 9 und der Leuchtstoffröhren 7 erwärmende Luft abführen kann. Zusätzlich befinden sich an der Rückwand 4 Abstandhalter 12, die vermeiden, dass die Rückseite mit den Ventilatoren 8 zu nah an eine eventuell dahinter befindliche Wand geschoben werden kann. Weiterhin ist darauf hinzuweisen, dass optional auch eine - hier nicht näher dargestellte Lichtfalle - für Ventilatoren vorgesehen werden kann, welche das Eindringen von Fremdlicht durch die Ventilatoren verhindert.

In dieser Darstellung ist vor allem die tunnelartige Einschränkung des Sichtfeldes auf den Monitor 9 und den Monitorrahmen 9.1 durch die tief herunter gezogene Blende 5 schön zu erkennen. Sie reicht bis auf die Höhe der Oberkante des Monitorrahmens 9.1 herunter und dient zusätzlich zur Abdeckung der Leuchtstoffröhren 7 nach vorne.

Ergänzend ist in der Figur 2 auch eine gepunktet dargestellte lichtdichte Abdichtung 9.2 gezeigt, die anstelle der Rückwand 4 verwendet werden kann. Diese Abdichtung 9.2 kann beispielsweise in einer passgenauen Verlängerung der Monitorblende bestehen, die durch entsprechende Dichtflächen oder Labyrinthe dafür sorgt, dass kein Fremdlicht von der Rückseite einfallen kann. Vorteilhaft ist hierbei, dass damit auf Lüftungsvorrichtungen und Zwangslüftungen verzichtet werden kann, allerdings ergibt sich ein weniger schön wirkender Gesamteindruck und eine Reinigung des Lichtkastens wird aufgrund der stark strukturierten Außenseite dann entsprechend erschwert.

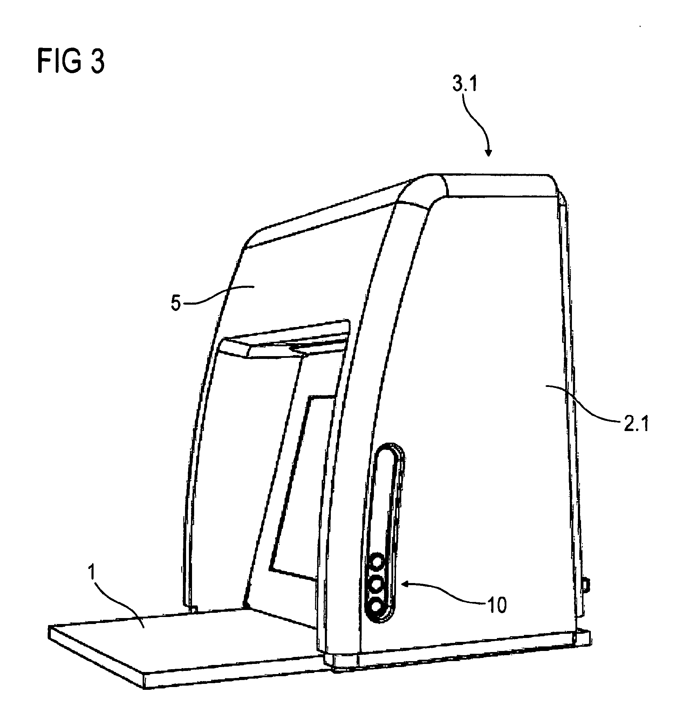

Die **Figur 3** zeigt den erfindungsgemäßen Lichtkasten aus den Figuren 1 und 2 mit zusammengeschobenen Beschattungselementen. Hier sind die vorderen Teile der Seitenwände 2.1 und des Oberteils 3.1 zusammen mit der Blende 5 in den hinteren Bereich über den Monitor und über die hinteren Teile der Seitenwände und des Oberteils gefahren. Damit hat sich die Länge des Lichtkastens um etwa die Hälfte reduziert. Die Sicht auf den Monitor ist frei.

Beim Zurückschieben sind die vorderen Teile der Seitenwände 2.1 in den Schienen der Grundplatte 1 fixiert, so dass die Bewegung kontrolliert gegenüber seitlichem Verrutschen durchgeführt werden kann. Zusätzlich können die Seitenwände in den Schienen mit Hilfe einer hier nicht sichtbaren Entriegelungsvorrichtung gesichert werden, um ein unbeabsichtigtes Vor- und Zurückschieben zu verhindern. Im vorderen Bereich der dem Betrachter zugewandten Seitenwand befindet sich eine Aussparung für mehrere Schalter 10, mit denen die verschiedenen Leuchtstoffröhren und der Ventilator individuell bedient werden können.

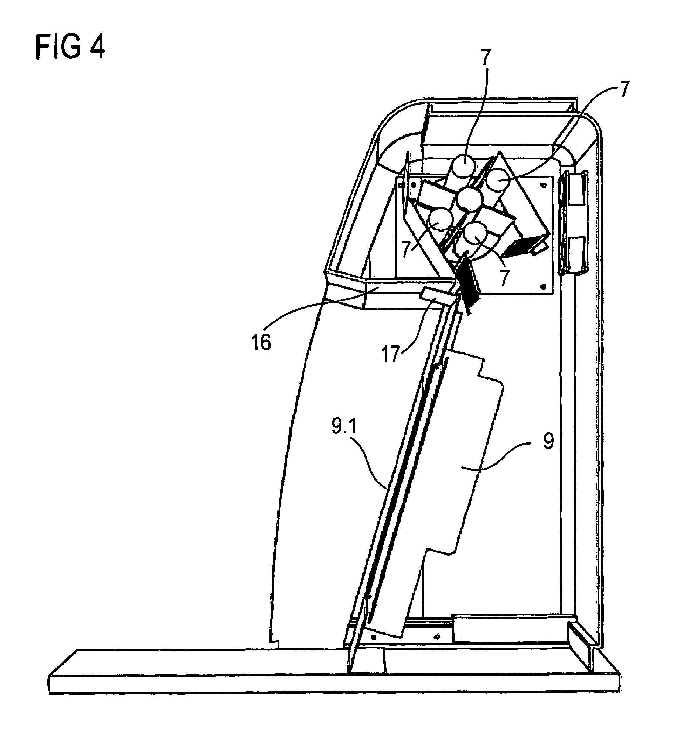

In der **Figur 4** ist ein vertikaler Schnitt durch den zusammengeschobenen Lichtkasten aus der Figur 3 zu sehen. Besonders gut ist hier zu erkennen, dass die Leuchtstoffröhren 7 den Monitor 9 nicht mehr bestrahlen. Sie sind zusammen mit dem vorderen Teil der Beschattungselemente und der Blende bis hinter den Monitor 9 geschoben. Zusätzlich wird der Monitor 9 durch eine Innenblende 16 und einen Monitorblendwinkel 17 im Normalbetrieb abgeschattet. Es ist dann im Normalbetrieb nicht mehr nötig die Leuchtstoffröhren 7 auszuschalten. Dies sorgt vor allem bei Leuchtstoffröhren 7 mit einer längeren Aufwärmphase für größere Flexibilität in der Nutzung des Arbeitsplatzes.

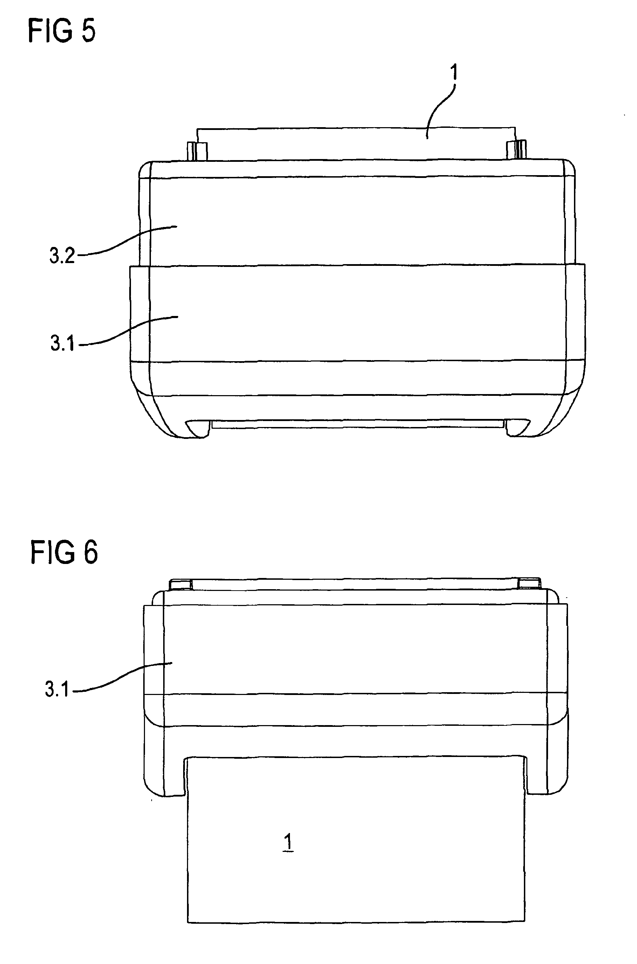

Die Figuren 5 und 6 zeigen den bisher beschriebenen Lichtkasten von oben; einmal im ausgefahrenen Zustand - siehe **Figur 5** **-** und einmal im zusammengeschobenen Zustand - siehe **Figur 6****.** Zu sehen ist vor allem das zweiteilig ausgeführte Oberteil 3.1 und 3.2, sowie im zusammengeschobenen Zustand die Grundplatte 1.

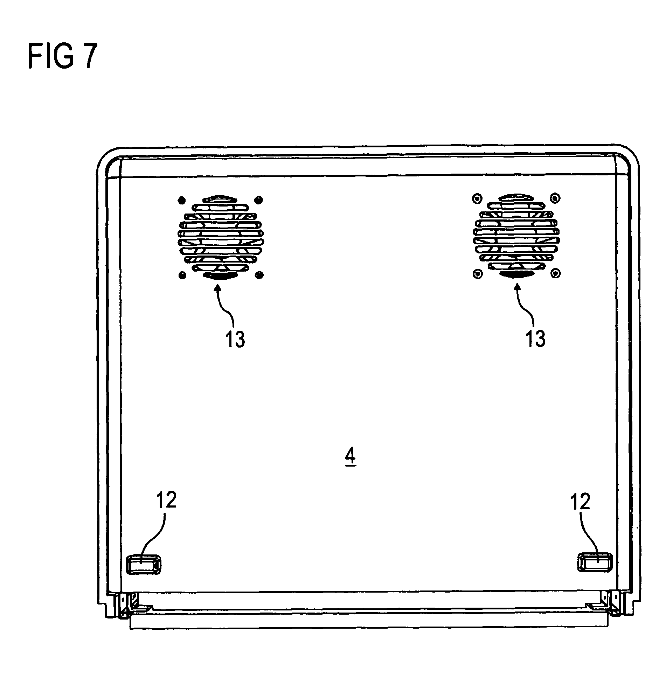

Die **Figur 7** zeigt den bisher beschriebenen Lichtkasten von hinten. In dieser Ausführung befinden sich im oberen Bereich der Rückwand 4 links und rechts jeweils mehrere Luftschlitze 13 hinter denen, also im Inneren des Lichtkastens, zwei Ventilatoren angeordnet sind. Mit diesen Ventilatoren kann die Luft im Lichtkasten zirkuliert werden. Außerdem sind im unteren Bereich zwei Abstandshalter 12 zu erkennen, die vermeiden, dass der Lichtkasten zu nahe an einer dahinter befindlichen Wand geschoben wird.

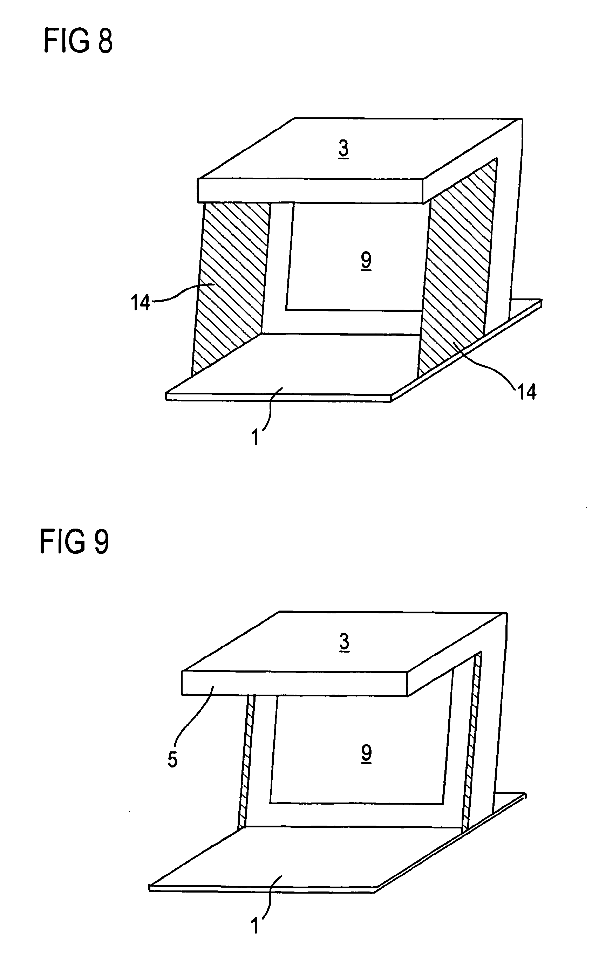

In der **Figur 8** ist eine andere beispielhaft gewählte Ausführungsform des erfindungsgemäßen Lichtkastens gezeigt. Hierbei bestehen die Seitenwände jeweils größtenteils aus einem Rollo 14 aus einem lichtundurchlässigen Material. Um den Lichtkasten zu schließen, werden die Rollos 14 nach vorne gezogen und ersetzten somit die Seitenwände. In dieser Variante werden die Rollos 14 in horizontaler Richtung auf- und zugezogen. Es ist aber auch eine Variante eines Lichtkastens mit vertikal aufziehbaren Rollos möglich.

Sind die Rollos 14 hinter den Monitor 9 aufgerollt, das heißt ist der Lichtkasten sozusagen offen, bleiben die Blende 5 und das Oberteil 3 stehen. Dies ist in der **Figur 9** gezeigt. Das Sichtfeld wird nun seitlich nicht mehr eingeschränkt. Allerdings befindet sich immer noch die Blende 5 und das Oberteil 3 im Sichtbereich vor dem Monitor 9. Sie bilden zusammen mit der Rückwand und der Grundplatte 1 ein feststehendes Gehäuse. Nachteilig am dieser Variante ist auch, dass die hinter der Blende 5 angeordnete Lichtquelle im offenen Zustand den Monitor 9 immer noch anstrahlt. Sie kann also nur unter Inkaufnahme längerer Wartezeiten und damit einer weniger flexiblen Nutzung des Arbeitsplatzes ausgeschaltet werden.

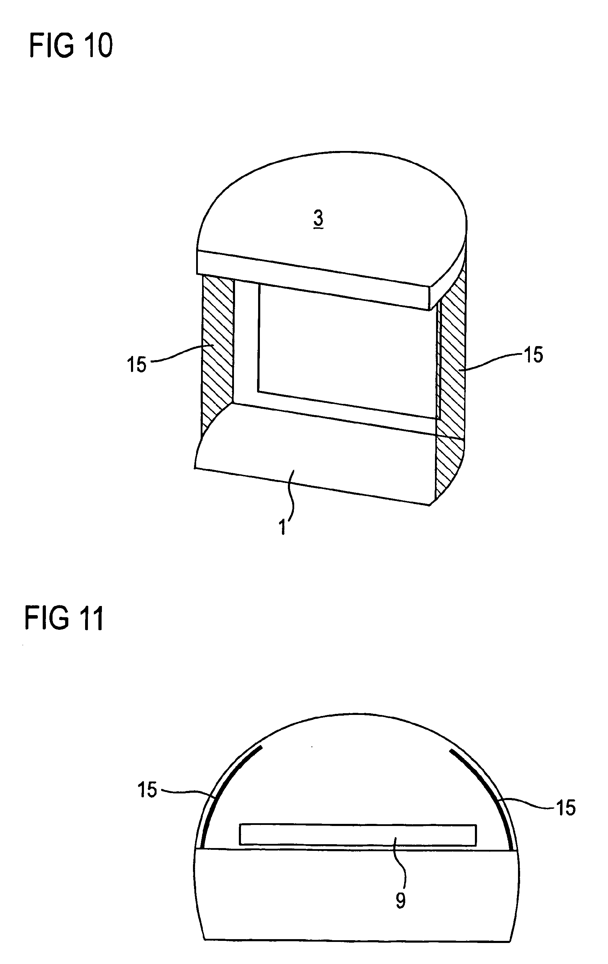

Eine weitere Ausführungsform eines erfindungsgemäßen Lichtkastens ist eine C-förmige Gestaltung. Hier weist der Lichtkasten im horizontalen Querschnitt eine C-Bogenform auf, wie in der **Figur 10** gezeigt ist. Die Grundplatte 1 und das Oberteil 3 sind bogenförmig mit einer abgeflachten Vorderseite. Die Seitenwände 15 und die Rückwand sind ebenfalls bogenförmig ausgeführt. Im geschlossenen Zustand wird das Sichtfeld durch die weit nach vorn gezogenen Seitenwände stark eingeschränkt. Um den Lichtkasten zu öffnen, werden die vorderen Bereiche der bogenförmigen Seitenwände 15 teleskopartig ins Innere des Lichtkastens hinter den Monitor geschoben, wie im horizontalen Querschnitt in der **Figur 11** gezeigt ist. Dabei bleiben die Blende, das Oberteil und die Lichtquelle über beziehungsweise vor dem Monitor 9 stehen, so dass das Sichtfeld nicht komplett frei ist und der Monitor 9 weiter angestrahlt wird. Dies kann optional dadurch verhindert werden, dass eine Blende unterhalb der Lampen vor diese gezogen wird.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Bezugszeichenliste:

| | |
|---|---|
| 1 | Grundplatte |
| 2 | Seitenwand |
| 2.1 | Vorderteil einer Seitenwand |
| 2.2 | Rückteil einer Seitenwand |
| 3 | Oberteil |
| 3.1 | Vorderteil des Oberteils |
| 3.2 | Rückteil des Oberteils |
| 4 | Rückwand |
| 5 | Blende |
| 6 | Schiene |
| 7 | Leuchtstoffröhre |
| 8 | Ventilator |
| 9 | Monitor |
| 9.1 | Monitorrahmen |
| 9.2 | lichtdichte Abdichtung |
| 10 | Schalter |
| 11 | Drehvorrichtung |
| 12 | Abstandhalter |
| 13 | Luftschlitze |
| 14 | Rollo |
| 15 | bogenförmige Seitenwände |
| 16 | Innenblende |
| 17 | Monitorblende |

## Patentansprüche

1. Vorrichtung zur Abschattung von Fremdlicht und zur Erzeugung definierter Lichtverhältnisse an einem Monitor (9) und gegebenenfalls an einem Muster, mit:
1.1. Beschattungselementen, bestehend aus zwei Seitenwänden (2), einer Blende (5) und einem Oberteil (3),
1.2. einer Grundplatte (1) und einer Vorrichtung (4, 9.2) zur Verhinderung rückwärtig eindringendem Fremdlicht, und
1.3. mindestens einer Lichtquelle (7) zur Beleuchtung einer Monitoroberfläche, **dadurch gekennzeichnet, dass**
1.4. die Beschattungselemente zumindest teilweise verfahrbar ausgestaltet sind, und
1.5. die mindestens eine Lichtquelle im vorderen Bereich der Beschattungselemente derart integriert ist, dass diese nach dem Zurückschieben der Beschattungselemente den Monitor nicht beleuchtet.

2. Vorrichtung gemäß dem voranstehenden Patentanspruch 1, **dadurch gekennzeichnet, dass** die Vorrichtung zur Verhinderung rückwärtig eindringendem Fremdlicht eine Rückwand (4) ist.

3. Vorrichtung gemäß dem voranstehenden Patentanspruch 2, **dadurch gekennzeichnet, dass** die Beschattungselemente und die Rückwand (4) komplett verschiebbar ausgeführt sind.

4. Vorrichtung gemäß dem voranstehenden Patentanspruch 1, **dadurch gekennzeichnet, dass** die Vorrichtung zur Verhinderung rückwärtig eindringendem Fremdlicht eine lichtdichte Abdichtung (9.2) zwischen einem Monitor (9) oder einem Monitorrahmen (9.1) und umgebend angeordneten Beschattungselementen (2, 3, 5) ist.

5. Vorrichtung gemäß einem der voranstehenden Patentansprüche 1 bis 4, **dadurch gekennzeichnet, dass** die Seitenwände (2) und das Oberteil (3) jeweils zweiteilig mit einem Vorderteil (2.1, 3.1) und einem Rückteil (2.2, 3.2) ausgeführt sind, wobei die Vorderteile (2.1, 3.1) in Richtung der Rückteile (2.2, 3.2) verschiebbar sind.

6. Vorrichtung gemäß einem der voranstehenden Patentansprüche 1 bis 5, **dadurch gekennzeichnet, dass** die Seitenwände (2) und eine gegebenenfalls vorhandene Rückwand (4) im horizontalen Querschnitt C-förmig ausgebildet sind, wobei die Seitenwände (15) teleskopartig zum hinteren Teil des C-Bogens geschoben werden können.

7. Vorrichtung gemäß einem der voranstehenden Patentansprüche 1 bis 6, **dadurch gekennzeichnet, dass** die Grundplatte (1) Schienen (6) aufweist, in denen die Seitenwände (2, 15) verschiebbar angeordnet sind.

8. Vorrichtung gemäß dem einem der voranstehenden Patentansprüche 1 bis 7, **dadurch gekennzeichnet, dass** die Seitenwände (2) zumindest teilweise als Rollo (14) ausgeführt sind.

9. Vorrichtung gemäß einem der voranstehenden Patentansprüche 1 bis 8, **dadurch gekennzeichnet, dass** die Seitenwände (2) und das Oberteil (3) klappbar ausgeführt sind.

10. Vorrichtung gemäß einem der voranstehenden Patentansprüche 1 bis 9, **dadurch gekennzeichnet, dass** mindestens eine Lüftungsvorrichtung, vorzugsweise ein Ventilator (8), vorgesehen ist.

11. Vorrichtung gemäß dem voranstehenden Patentanspruch 10 , **dadurch gekennzeichnet, dass** für die Lüftungsvorrichtung eine Lichtfalle vorgesehen ist.

12. Vorrichtung gemäß einem der voranstehenden Patentansprüche 1 bis 11, **dadurch gekennzeichnet, dass** mindestens eine Entriegelungsvorrichtung für bewegliche Bauteile vorgesehen ist.

13. Vorrichtung gemäß einem der voranstehenden Patentansprüche 1 bis 12, **dadurch gekennzeichnet, dass** die beweglichen Bauteile zumindest teilweise über einen Elektroantrieb verfügen.

14. Vorrichtung gemäß einem der voranstehenden Patentansprüche 1 bis 13, **dadurch gekennzeichnet, dass** die Beschattungselemente auf ihrer Innenseite und die Grundplatte (1) zumindest teilweise, jedoch mit Ausnahme der Monitorblende, mit lichtschluckenden Oberflächen versehen sind.

15. Vorrichtung gemäß einem der voranstehenden Patentansprüche 1 bis 14, **dadurch gekennzeichnet, dass** im Bereich der mindestens einen Lichtquelle (7) eine variable Blende vorgesehen ist, durch die die Lichtquelle (7) bei Bedarf nach Außen abgeschlossen werden kann.

## Claims

1. Device for shading extraneous light and for producing define lighting conditions on a monitor (9) and, if appropriate, on a pattern, having:
1.1. shading elements comprising two side walls (2), a screen (5) and an upper part (3),
1.2. a baseplate (1) and a device (4, 9.2) for inhibiting extraneous light penetrating at the rear, and
1.3. at least one light source (7) for illuminating a monitor surface,
**characterized in that**
1.4. the shading elements are at least partially movably configured, and
1.5. the at least one light source is integrated in the front region of the shading elements in such a way that the latter do not illuminate the monitor after the shading elements have been pushed back.

2. Device according to the preceding Patent Claim 1, **characterized in that** the device for inhibiting extraneous light penetrating at the rear is a rear wall (4).

3. Device according to the preceding Patent Claim 2, **characterized in that** the shading elements and the rear wall (4) are designed to be completely displaceable.

4. Device according to the preceding Patent Claim 1, **characterized in that** the device for inhibiting extraneous light penetrating at the rear is a light-tight seal (9.2) between a monitor (9) or a monitor frame (9.1) and shading elements (2, 3, 5) arranged surrounding them.

5. Device according to one of the preceding Patent Claims 1 to 4, **characterized in that** the side walls (2) and the upper part (3) are respectively designed in two parts with a front part (2.1, 3.1) and a rear part (2.2, 3.2), the front part (2.1, 3.1) being displaceable in the direction of the rear part (2.2, 3.2).

6. Device according to one of the preceding Patent Claims 1 to 5, **characterized in that** the side walls (2) and a rear wall (4) that may be present are designed in the shape of a C in horizontal cross section, it being possible for the side walls (15) to be pushed telescopically to the rear part of the C bend.

7. Device according to one of the preceding Patent Claims 1 to 6, **characterized in that** the baseplate (1) has rails (6) in which the side walls (2, 15) are displaceably arranged.

8. Device according to one of the preceding Patent Claims 1 to 7, **characterized in that** the side walls (2) are at least partially designed as a roller blind (14).

9. Device according to one of the preceding Patent Claims 1 to 8, **characterized in that** the side walls (2) and the upper part (3) are foldably designed.

10. Device according to one of the preceding Patent Claims 1 to 9, **characterized in that** at least one ventilation device, preferably a fan (8), is provided.

11. Device according to the preceding Patent Claim 10, **characterized in that** a light trap is provided for the ventilation device.

12. Device according to one of the preceding Patent Claims 1 to 11, **characterized in that** at least one unlocking device is provided for movable components.

13. Device according to one of the preceding Patent Claims 1 to 12, **characterized in that** the movable components have an electric drive, at least in part.

14. Device according to one of the preceding Patent Claims 1 to 13, **characterized in that** on their inner side the shading elements, and the baseplate (1) at least in part, but with the exception of the monitor screen, are provided with light-absorbing surfaces.

15. Device according to one of the preceding Patent Claims 1 to 14, **characterized in that** provided in the region of the at least one light source (7) is a variable screen by means of which the light source (7) can be sealed off from the outside if desired.

## Revendications

1. Dispositif d'occultation de lumière parasite destiné à occulter la lumière parasite et à générer des conditions de luminosité définies sur un écran (9) et le cas échéant, sur un échantillon, comprenant :
1.1. des éléments d'occultation constitués de deux parois latérales (2), d'un diaphragme (5) et d'une partie supérieure (3),
1.2. une plaque de base (1) et un dispositif (4, 9.2) destinés à empêcher la pénétration par l'arrière de la lumière parasite, et
1.3 au moins une source de lumière (7) destinée à éclairer une surface d'écran, **caractérisé en ce que** 1.4. les éléments d'occultation sont réalisés de manière à être au moins partiellement mobiles, et
1.5. l'au moins une source de lumière, dans la région avant des éléments d'occultation, est intégrée de manière à ce qu'elle n'éclaire pas l'écran après que les éléments d'occultation ont été poussés vers l'arrière.

2. Dispositif selon la revendication 1 précédente, **caractérisé en ce que** le dispositif destiné à empêcher la pénétration par l'arrière de la lumière parasite est une paroi arrière (4).

3. Dispositif selon la revendication 2 précédente, **caractérisé en ce que** les éléments d'occultation et la paroi arrière (4) sont réalisés de manière à pouvoir être entièrement déplaçables.

4. Dispositif selon la revendication 1 précédente, **caractérisé en ce que** le dispositif destiné à empêcher l'introduction par l'arrière de la lumière parasite est un joint opaque à la lumière (9.2) entre un écran (9) ou un châssis d'écran (9.1) et des éléments d'occultation (2, 3, 5) disposés circonférentiellement.

5. Dispositif selon l'une quelconque des revendications 1 à 4 précédentes, **caractérisé en ce que** les parois latérales (2) et la partie supérieure (3) sont respectivement réalisées en deux parties avec une partie avant (2.1, 3.1) et une partie arrière (2.2, 3.2), les parties avant (2.1, 3.1) étant déplaçables dans la direction des parties arrière (2.2, 3.2).

6. Dispositif selon l'une quelconque des revendications 1 à 5 précédentes, **caractérisé en ce que** les parois latérales (2) et une paroi arrière éventuellement présente (4) sont réalisées de manière à présenter la forme d'un C en coupe transversale horizontale, les parois latérales (15) pouvant être déplacées de manière télescopique vers la partie arrière de l'arc en C.

7. Dispositif selon l'une quelconque des revendications 1 à 6 précédentes, **caractérisé en ce que** la plaque de base (1) présente des rails (6) dans lesquels les parois latérales (2, 15) sont disposées de manière à pouvoir être déplacées.

8. Dispositif selon l'une quelconque des revendications 1 à 7 précédentes, **caractérisé en ce que** les parois latérales (2) sont réalisées au moins en partie sous la forme d'un volet roulant (14).

9. Dispositif selon l'une quelconque des revendications 1 à 8 précédentes, **caractérisé en ce que** les parois latérales (2) et la partie supérieure (3) sont réalisées de manière à ce qu'elles soient rabattables.

10. Dispositif selon l'une quelconque des revendications 1 à 9 précédentes, **caractérisé en ce qu'**il est prévu au moins un dispositif de ventilation, de préférence un ventilateur (8).

11. Dispositif selon la revendication 10 précédente, **caractérisé en ce qu'**il est prévu un piège à lumière pour le dispositif de ventilation.

12. Dispositif selon l'une quelconque des revendications 1 à 11 précédentes, **caractérisé en ce qu'**il est prévu au moins un dispositif de déverrouillage pour les composants mobiles.

13. Dispositif selon l'une quelconque des revendications 1 à 12 précédentes, **caractérisé en ce que** les composants mobiles commandent au moins partiellement un entraînement électrique.

14. Dispositif selon l'une quelconque des revendications 1 à 13 précédentes, **caractérisé en ce que** les éléments d'occultation sont dotés au moins en partie sur leur face intérieure et sur la plaque de base (1), mais à l'exception du masque d'écran, de surfaces absorbant la lumière.

15. Dispositif selon l'une quelconque des revendications 1 à 14 précédentes, **caractérisé en ce que** dans la région de l'au moins une source de lumière (7), il est prévu un diaphragme variable au moyen duquel la source de lumière (7) peut si nécessaire être occultée vers l'extérieur.
